# EUROPÄISCHE PATENTSCHRIFT

(11) **EP 1 701 142 B1**
(45) Veröffentlichungstag und Bekanntmachung des Hinweises auf die Patenterteilung: **10.10.2018**
(21) Anmeldenummer: 05013247.1
(22) Anmeldetag: 20.06.2005
(51) Int. Cl.: G01F 23/284, G01B 15/04

(54) **Verfahren zur Messung des Füllstands eines in einem Behälter vorgesehenen Mediums auf der Grundlage des Radar-Prinzips**
Method for measuring the level of a medium inside a container based on the radar principle
Procédé de mesure du niveau d'un milieu dans un récipient basé sur le principe du radar

(30) Priorität: 11.03.2005 DE 102005011686
(43) Veröffentlichungstag der Anmeldung: 13.09.2006
(73) Patentinhaber: Krohne S.A., 26103 Romans - Cedex (FR)
(72) Erfinder: Rolfes, Ilona, 44795 Bochum (DE); Musch, Thomas Dr., 45481 Mülheim/Ruhr (DE)
(74) Vertreter: Gesthuysen Patent- und Rechtsanwälte

(56) Entgegenhaltungen:
- WO-A-2005/078475
- DE-A1- 10 149 851
- US-A- 5 115 242
- US-A1- 2002 059 828
- US-A1- 2004 031 335

## Beschreibung

Die Erfindung betrifft ein Verfahren zur Messung des Füllstands eines in einem Behälter vorgesehenen Mediums auf der Grundlage des Radar-Prinzips, wobei ein Meßsignal erzeugt und in Richtung des Mediums ausgesandt wird, ein zurückreflektierter Anteil des Meßsignals erfaßt wird und mittels der Laufzeit des Meßsignals ein Füllstand ermittelt wird.

Füllstandsmeßverfahren der eingangs genannten Art sind aus dem Stand der Technik, wie der WO 01/11323 A1, gut bekannt. Bei industriellen Anwendungen besteht häufig die Aufgabe, den Füllstand eines Mediums, wie einer Flüssigkeit oder eines Schüttguts, in einem Behälter, wie einem Tank, zu bestimmen. Hierzu ist eine Mehrzahl von Techniken bekannt, wobei man zwischen berührenden Füllstandsmeßverfahren einerseits und nicht berührenden Füllstandsmeßverfahren andererseits unterscheidet. Zu den berührenden Füllstandsmeßverfahren, bei denen ein Bestandteil der Meßeinrichtung mit dem Medium, dessen Füllstand zu messen ist, in Berührung kommt, gehören z.B. die Füllstandmessung mittels eines Schwimmers, mittels eines Auftriebskörpers oder mittels einer Tastplatte. Ferner gehören zu den berührenden Füllstandsmeßverfahren kapazitive Messungen, bei denen die Füllhöhe in Abhängigkeit der Kapazität zwischen einer in das Medium eintauchenden Elektrode und der Wand des Behälters erfaßt wird, sowie eine thermische Messung, bei der die erhöhte Wärmeabfuhr beim Eintauchen eines stromdurchflossenen, temperaturabhängigen Widerstands in das Medium dadurch ausgenutzt wird, daß sich der elektrische Widerstand mit der Eintauchtiefe verändert.

Zu den nicht berührenden Füllstandsmeßverfahren gehören z.B. die Messung mittels Laser oder Ultraschall. Dabei wird ein Laser- bzw. Ultraschallsignal ausgesandt, an der Oberfläche des Mediums reflektiert, und das reflektierte Signal wird wieder erfaßt, wobei auf die Füllhöhe des Mediums über die Laufzeit des Signals geschlossen wird. Auf demselben Prinzip basiert das Radar-Füllstandsmeßverfahren, bei dem ein Mikrowellensignal erzeugt, über eine Antenne, wie eine Stabantenne, eine Hornantenne oder eine Patch-Antenne, in Richtung auf das Medium, dessen Füllstandshöhe zu messen ist, ausgesandt wird, an der Oberfläche des Mediums reflektiert wird und von der Antenne oder einer anderen Antenne wieder erfaßt wird.

Dabei existieren unterschiedliche Radar-Füllstandsmeßverfahren: Beim Puls-Radar-Füllstandsmeßverfahren wird ein Mikrowellensignal in kurzen Impulsen ausgesandt, und zwar unmoduliert oder trägerfrequenzmoduliert. Aus der Laufzeit der Mikrowellenimpulse vom Sender zur Oberfläche des Mediums und zurück zum Empfänger wird der Abstand zwischen Sender/Empfänger und dem Medium ermittelt, wobei als Sender und Empfänger eine gemeinsame Antenne verwendet werden kann. Beim FMCW-Radar-Füllstandsmeß-verfahren (FMCW = Frequency Modulated Continuous Wave) liegt das Mikrowellensignal kontinuierlich an, wobei jedoch die Frequenz moduliert wird, und zwar typischerweise in aufeinander folgenden Rampen. Durch die Verzögerungszeit während der Signalausbreitung hat sich die Sendefrequenz beim Empfang des reflektierten Signals geändert, so daß man aus der Differenzfrequenz auf den Abstand der reflektierenden Oberfläche und damit auf den Füllstand schließen kann. Schließlich ist noch das TDR-Radar-Füllstandsmeß-verfahren (TDR = Time Domain Reflectometry) bekannt, das Ähnlichkeit mit dem Puls-Radar-Füllstandsmeßverfahren aufweist, im allgemeinen jedoch leitungsgebunden arbeitet und elektrische Impulse ohne Trägerfrequenz verwendet.

Problematisch ist mitunter, insbesondere bei der Bestimmung der Füllstandshöhe von Schüttgütern, daß mittels der Laufzeit des zurückreflektierten Anteils des Meßsignals nicht direkt auf die Füllstandshöhe geschlossen werden kann. Bei Schüttgütern liegt nämlich typischerweise keine planare Oberfläche vor, sondern vielmehr ein Schüttkegel vor, so daß überhaupt keine definierte, eindeutige Füllstandshöhe existiert. Darüber hinaus kann es vorkommen, daß das ausgesandte Meßsignal nicht von dem in dem Behälter vorgesehenen Medium reflektiert wird, sondern von einer in dem Behälter angebrachten Einrichtung, wie einem Rührwerk.

In der eingangs angesprochenen WO 01/11323 A1 ist nun ein derartiges System beschrieben, das mit sehr hohen Frequenzen von wenigstens einigen GHz, typischerweise sogar von über 24 GHz, arbeitet. Damit ergibt sich eine extrem enge Abstrahlcharakteristik der verwendeten Sendeantenne, so daß das Meßsignal definiert in eine bestimmte, enge Raumrichtung ausgesandt werden kann. Auf diese Weise kann insbesondere auch bewußt vermieden werden, daß das ausgesandte Signal eine in dem Behälter vorgesehene Einrichtung, wie ein Rührwerk, trifft. Darüber hinaus kann der Ort, an dem das ausgesandte Meßsignal auf das in den Behälter vorgesehene Medium trifft, genau festgelegt werden. Gleichwohl bleibt die Füllstandsbestimmung von Schüttgütern insbesondere wegen des Vorliegens eines Schüttkegels schwierig.

Weiterhin sind aus der DE 101 49 851 A1 eine Vorrichtung und ein Verfahren zur Bestimmung des Füllstandes eines Füllguts in einem Behälter über ein Laufzeitverfahren bekannt. Die Vorrichtung strahlt dazu Meßsignale in wenigstens zwei voneinander verschiedene Meßbereiche in das Innere des Behälters ab. Die in den verschiedenen Meßbereichen reflektierten Echosignale werden detektiert und zur Ermittlung des Füllstands und gegebenenfalls zur Ermittlung von prozeß- und/oder sensorbedingten Störechosignalen herangezogen.

Die Druckschrift US 2004 / 031 335 A1 beschreibt ein Verfahren zur Messung des Füllstandes eines in einem Behälter vorgesehenen Mediums, wozu eine Mehrzahl von Antennen vorgesehen ist, die an unterschiedlichen Orten angeordnet sind und die jeweils ein Signal in Richtung des Mediums aussenden und einen zurückreflektierten Anteil des Meßsignals erfassen können.

Aus dem Dokument US 5 115 242 ist weiterhin eine Vorrichtung und ein Verfahren zur Füllstandsmessung mit einer Sendeantenne und einer separaten Empfangsantenne bekannt,

Damit ist es die Aufgabe der Erfindung, ein derartiges Verfahren zum Messen des Füllstands eines in einem Behälter vorgesehenen Mediums anzugeben, mit dem eine verläßliche Füllstandsbestimmung auch bei schwierigen Randbedingungen, wie bei Einbauten in dem Behälter oder bei dem Vorliegen von Schüttgütern mit Schüttkegeln, ermöglicht wird.

Ausgehend von dem eingangs beschriebenen Verfahren ist diese Aufgabe dadurch gelöst, daß das Meßsignal in eine Mehrzahl von voneinander verschiedenen Bereichen ausgesandt wird, die zurückreflektierten Anteile des Meßsignals an einer Mehrzahl von Empfangsstellen empfangen werden, daß eine Mehrzahl von fest installierten Sendeantennen und eine Mehrzahl von fest installierten Empfangsantennen vorgesehen sind, wobei die Sendeantennen und die Empfangsantennen nicht als Sende- und Empfangsantennen wirken, wobei an jeder Empfangsstelle eine Empfangsantenne angeordnet ist, wobei nacheinander jeweils eine Sendeantenne und eine Empfangsantenne gleichzeitig aktiviert werden, so daß mehrere, vorzugsweise alle Kombinationen einer Sendeantenne mit einer Empfangsantenne verwendet werden, und daß für wenigstens zwei Empfangsstellen die jeweilige Amplitude und Phase des zurückreflektierten Anteils des Meßsignals ermittelt werden, und mit diesen Amplituden- und Phaseninformationen auf der Grundlage eines geometrischen Modells für die Oberflächenform des in dem Behälter vorgesehenen Mediums die Oberflächenstruktur des Mediums näherungsweise bestimmt wird.

Erfindungswesentlich ist also, daß das Meßsignal nacheinander derart ausgesandt wird, daß unterschiedliche Bereiche des in dem Behälter vorgesehenen Mediums "ausgeleuchtet" werden, wobei die zurückreflektierten Anteile des Meßsignals nicht nur an einer Empfangsstelle, also an einer Position einer Empfangsantenne, sondern an mehreren Empfangsstellen empfangen werden. Dabei ist erfindungsgemäß ferner vorgesehen, daß für wenigstens zwei Empfangsstellen die jeweilige Amplitude und Phase des zurückreflektierten Anteils des Meßsignals ermittelt wird und mit diesen Amplituden- und Phaseninformationen auf der Grundlage eines geometrischen Modells für die Oberflächenform des in dem Behälter vorgesehenen Mediums die tatsächlich vorliegende Oberflächenstruktur des Mediums näherungsweise bestimmt wird.

Das heißt also, daß die an den verschiedenen Empfangsstellen gewonnenen Amplituden- und Phaseninformationen im Rahmen eines geometrisch-mathematischen Modells für die Topologie der Oberflächenform des Mediums verwendet werden, um konkreten Parameter, wie Höhe, Steigungen usw. für eine grundsätzlich angenommene Oberflächenform zu ermitteln. Dabei kann z.B. angenommen werden, daß die Oberflächenform einer einfachen geometrischen Struktur, wie einer Kegelform folgt, so daß als charakteristische Parameter für die Form z.B. die Höhe des Kegels und dessen Steigung ermittelt werden können. Gegeben durch die Radar-Auflösung in Ausbreitungsrichtung einerseits und durch die "Ausleuchtung" eines bestimmten Bereichs andererseits ergibt sich im Rahmen dieses Modells dann eine Auflösungszelle, die letztlich zu solchen Parametern im Rahmen des verwendeten Modells führt, die Rückschluß auf die Oberflächenstruktur des Mediums in dem Behälter zulassen. Näherungsweise erhält man damit, quasi durch eine bereichsweise Abtastung, Informationen zur dreidimensionalen Topologie der Oberfläche des Mediums, so daß sich z.B. bei einem Schüttgut eine Aussage über Größe, Form und Struktur eines Schüttkegels treffen lassen. Gemäß einer bevorzugten Weiterbildung der Erfindung kann dann auch vorgesehen sein, mittels der näherungsweise bestimmten Oberflächenstruktur des Mediums dessen Volumen zu berechnen, um eine Aussage über die Menge des in dem Behälter befindlichen Mediums treffen zu können.

Gemäß einer bevorzugten Weiterbildung der Erfindung ist ferner vorgesehen, daß als Meßsignal ein FMCW-Signal verwendet wird. Das FMCW-Prinzip ist nämlich in besonderem Maße geeignet, solche Phasen- und Amplitudeninformationen zu liefern, die im Rahmen des angesprochenen Modells auf einfache Weise einen Rückschluß auf die konkreten Parameter einer angenommenen Oberflächenstruktur zulassen.

Ein Füllstandsmeßgerät zur Verwendung mit dem zuvor genannten Verfahren kann nun auf unterschiedliche Weisen aufgebaut sein. Gemäß einer nicht erfindungsgemäßen Weiterbildung kann z.B. vorgesehen sein, daß jeweils eine Sendeantenne und eine Empfangsantenne vorgesehen sind, wobei die Empfangsantenne und vorzugsweise auch die Sendeantenne an wenigstens zwei voneinander verschiedene Orte bewegt werden, um an dem jeweiligen Ort ein Meßsignal auszusenden bzw. einen zurückreflektierten Anteil des Meßsignals zu empfangen. Die damit jeweils aufgenommenen zurückreflektierten Anteile des Meßsignals werden dann anschließend im Rahmen der weiteren Signalverarbeitung überlagert, um eine Auswertung, wie oben beschrieben, zu ermöglichen.

Erfindungsgemäß ist vorgesehen, daß eine Mehrzahl von Empfangsantennen und auch eine Mehrzahl von Sendeantennen verwendet werden. Insbesondere ist dabei vorgesehen, daß eine Mehrzahl von fest installierten Sendeantennen und eine Mehrzahl von fest installierten Empfangsantennen verwendet werden, wobei nacheinander jeweils eine Sendeantenne und eine Empfangsantenne gleichzeitig aktiviert werden, so daß mehrere, vorzugsweise alle Kombinationen einer Sendeantenne mit einer Empfangsantenne durchgeschaltet werden. Dabei bedeutet, daß jeweils eine Sendeantenne und eine Empfangsantenne gleichzeitig aktiviert werden, daß diese zeitlich wenigstens teilweise überlappend ein Meßsignal aussenden bzw. zurückreflektierte Anteile des Meßsignals empfangen können.

Gemäß einer bevorzugten Weiterbildung der Erfindung kommt dabei insbesondere ein Array von Patch-Antennen in Frage, wobei separate Empfangsantennen bzw. Sendeantennen vorgesehen sein können, bei reziproker Anordnung der Antennen jedoch auch die Möglichkeit gegeben ist, die einzelnen Antennen sowohl als Sende- als auch als Empfangsantenne zu verwenden.

Im einzelnen gibt es nun eine Vielzahl von Möglichkeiten, das erfindungsgemäße Verfahren auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele unter Bezugnahme auf die Zeichnung verwiesen. In der Zeichnung zeigt
- Fig. 1: schematisch ein Füllstandsmeßgerät zur Durchführung eines Füllstandsmeßverfahrens gemäß einem bevorzugten Ausführungsbeispiel der Erfindung,
- Fig. 2: die Anordnung von Sendeantennen und Empfangsantennen gemäß einem bevorzugten Ausführungsbeispiel der Erfindung,
- Fig. 3: die Beschaltung von Sendeantennen bzw. der Empfangsantennen gemäß einem bevorzugten Ausführungsbeispiel der Erfindung,
- Fig. 4: die Beschaltung von Empfangsantennen gemäß einem anderen bevorzugten Ausführungsbeispiel der Erfindung,
- Fig. 5: schematisch die Zusammensetzung des von einer Empfangsantenne empfangenen Signals gemäß einem nichterfindungsgemäßem Ausführungsbeispiel,
- Fig. 6: die möglichen Kombinationen der Sendeantennen mit den Empfangsantennen gemäß einem bevorzugten Ausführungsbeispiel der Erfindung und
- Fig. 7: die nichterfindungsgemäße Kombinationsmöglichkeiten, wenn die Antennen sowohl als Sende- als auch Empfangsantennen verwendet werden.

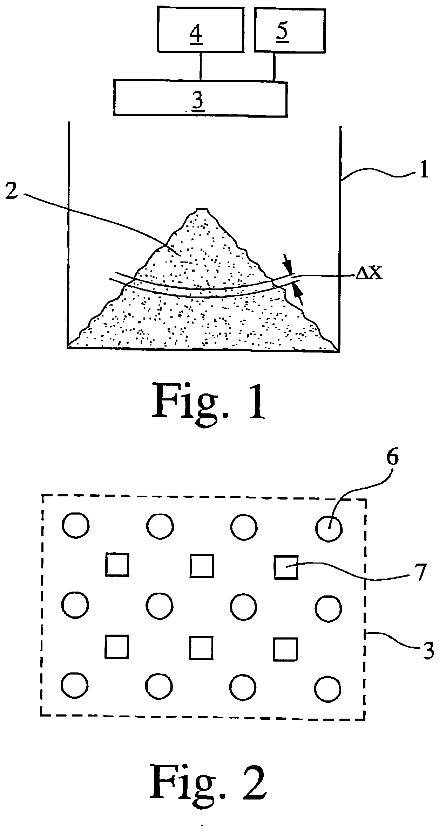

Fig. 1 zeigt schematisch ein Füllstandsmeßgerät zur Durchführung eines Füllstandsmeßverfahrens gemäß einem bevorzugten Ausführungsbeispiel der Erfindung. Oberhalb eines Behälters 1, in dem ein Medium 2, vorliegend nämlich ein Schüttgut, vorgesehen ist, ist eine Antenneneinrichtung 3 angeordnet, der von einer Signalerzeugungseinrichtung 4 ein Meßsignal zugeführt wird und die zur Weiterverarbeitung der erfaßten zurückreflektierten Anteile des Meßsignals mit einer Signalverarbeitungseinrichtung 5 verbunden ist.

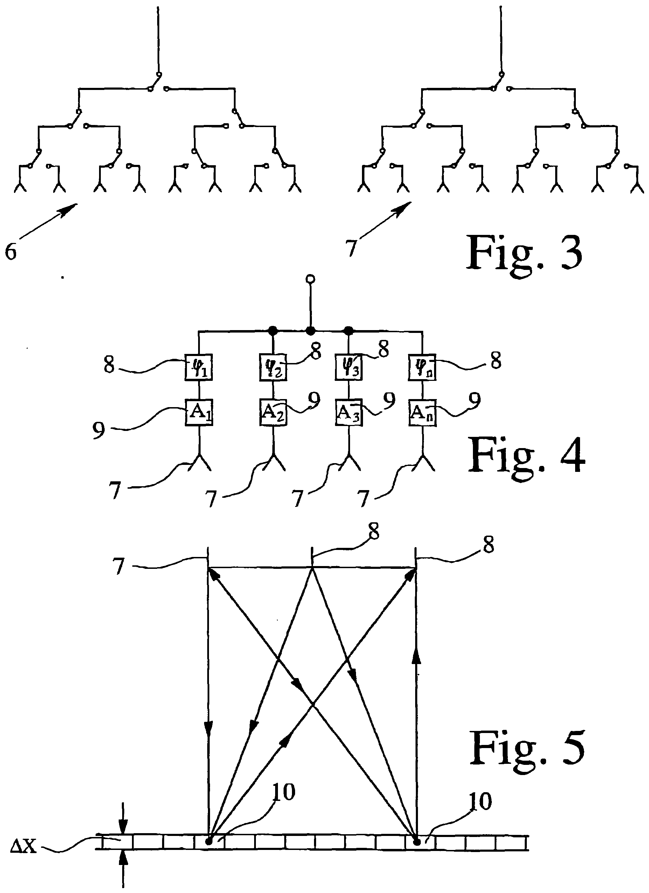

Wie aus Fig. 2 ersichtlich, weist die Antenneneinrichtung 3 gemäß einem bevorzugten Ausführungsbeispiel der Erfindung eine abwechselnde Anordnung von Sendeantennen 6 und Empfangsantennen 7 in einer Ebene auf. Aus Fig. 3 ist nun ersichtlich, wie die Sendeantennen 6 bzw. die Empfangsantennen 7 gemäß einem bevorzugten Ausführungsbeispiel verschaltet sein können, nämlich derart, daß jeweils genau eine Sendeantenne 6 sowie genau eine Empfangsantenne 7 "aktiviert" werden können. Das bedeutet, daß nacheinander alle Kombinationen einer jeweiligen Sendeantenne 6 mit einer jeweiligen Empfangsantenne 7 angeschaltet werden können, um anschließend das von der jeweiligen Empfangsantenne 7 empfangene Signal, nämlich den entsprechenden rückreflektierten Anteil des von der jeweiligen Sendeantenne 6 ausgesandten Meßsignals, in der Signalverarbeitungseinrichtung 5 weiterzuverarbeiten.

In der Signalverarbeitungseinrichtung 5 erfolgt dann die Ermittlung der jeweiligen Amplitude und Phase des zurückreflektierten Anteils des Meßsignals für eine jeweilige Kombination von Sendeantenne 6 und Empfangsantenne 7. Wie weiter oben schon angesprochen, werden die an den verschiedenen Empfangsstellen gewonnenen Amplituden- und Phaseninformationen im Rahmen eines geometrisch-mathematischen Modells für die Topologie der Oberflächenform des Mediums 2 verwendet werden, um Parameter für eine angenommene Oberflächenform zu ermitteln. Gegeben durch die Radar-Auflösung Δ x in Ausbreitungsrichtung einerseits und durch die "Ausleuchtung" bestimmter Bereiche ergeben sich im Rahmen des verwendeten Modells dann Auflösungszellen 10, wie z.B. in Fig. 5 gezeigt, über die die Parametern für die Oberflächenstruktur des Mediums 2 in dem Behälter 1 ermittelt werden können. Näherungsweise erhält man damit also die gewünschten Informationen zur Topologie der Oberfläche des Mediums 2, so daß sich Aussagen über Größe, Form und Struktur des Schüttkegels des Mediums 2 treffen lassen.

Statt einer Überlagerung der von den einzelnen Empfangsantennen 7 empfangenen Signale in der Signalverarbeitungseinrichtung 5 kann, wie in Fig. 4 gezeigt, auch eine analoge Überlagerung der empfangenen Signale erfolgen, nämlich indem den Empfangsantennen 7 direkt Phasenschalter 8 sowie Amplitudenschalter 9 nachgeschaltet sind. Diese ist jedoch verhältnismäßgi aufwendig, so daß eine "Software-Lösung" vorgezogen wird.

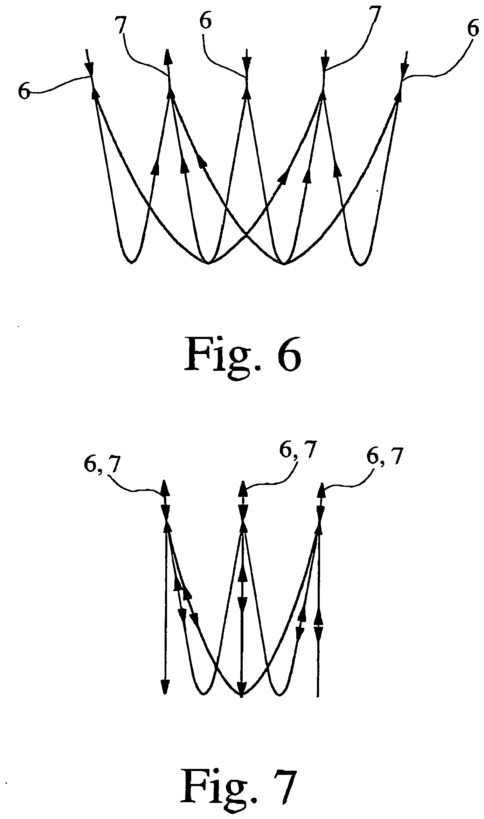

Jede Auflösungszelle 10, die über eine Kombination einer Sendeantenne 6 und einer Empfangsantenne 7 erfaßt wird, liefert quasi einen Ansatzpunkt, um über ein Näherungs- bzw. Interpolationsverfahren auf die Parameter zu schließen, über die bei einer angenommenen Form der Oberflächenstruktur des in dem Behälter 1 befindlichen Mediums 2 auf dessen konkret vorliegende Struktur zurückgeschlossen werden kann. Mit steigender Anzahl von Sendeantennen 6 und Empfangsantennen 7 steigt somit die Anzahl der Auflösungszellen 10, die quasi als Ausgangspunkt für die näherungsweise Ermittlung der Oberflächenstruktur des Mediums 2 dienen. Werden, wie in Fig. 6 gezeigt, derartige Antennen verwendet, die entweder als Sendeantenne 6 oder als Empfangsantenne 7 wirken, so ergeben sich bei der Verwendung von n Sendeantennen 6 und m Empfangsantennen 7 eine Anzahl von n x m Auflösungszellen 10 zur Ermittlung der Oberflächenstruktur des Mediums 2. Ist es jedoch möglich, die Antennen sowohl als Sendeantennen 6 als auch als Empfangsantennen 7 zu verwenden, wie in Fig. 7 dargestellt, läßt sich mit einer Gesamtzahl von n Sende-/Empfangsantennen 6, 7 eine Anzahl n + n (n-1)/2 Auflösungszellen 10 erzielen.

## Patentansprüche

1. Verfahren zur Messung des Füllstands eines in einem Behälter (1) vorgesehenen Mediums (2) auf der Grundlage des Radar-Prinzips, wobei ein Meßsignal erzeugt und mittels einer Sendeantenne (6) in Richtung des Mediums (2) ausgesandt wird, ein zurückreflektierter Anteil des Meßsignals mittels einer Empfangsantenne (7) erfaßt wird und mittels der Laufzeit des Meßsignals ein Füllstand ermittelt wird, wobei das Meßsignal in eine Mehrzahl von voneinander verschiedenen Bereichen ausgesandt wird,
**dadurch gekennzeichnet,**
**dass** die zurückreflektierten Anteile des Meßsignals jeweils an einer Mehrzahl von voneinander verschiedenen Empfangsstellen empfangen werden, daß eine Mehrzahl von fest installierten Sendeantennen (6) und eine Mehrzahl von fest installierten Empfangsantennen (7) vorgesehen sind, wobei die Sendeantennen (6) und die Empfangsantennen (7) nicht als Sende- und Empfangsantennen wirken, wobei an jeder Empfangsstelle eine Empfangsantenne angeordnet ist,
wobei nacheinander jeweils eine Sendeantenne (6) und eine Empfangsantenne (7) gleichzeitig aktiviert werden, so daß mehrere, vorzugsweise alle Kombinationen einer Sendeantenne (6) mit einer Empfangsantenne (7) verwendet werden, und daß für wenigstens zwei Empfangsstellen die jeweilige Amplitude und Phase des zurückreflektierten Anteils des Meßsignals ermittelt werden und mit diesen Amplituden- und Phaseninformationen auf der Grundlage eines geometrischen Modells für die Oberflächenform des in dem Behälter (1) vorgesehenen Mediums (2) die Oberflächenstruktur des Mediums (2) näherungsweise bestimmt wird.

2. Verfahren nach Anspruch 1, **dadurch gekennzeichnet, daß** als Meßsignal ein FMCW-Signal verwendet wird.

## Claims

1. Method for measuring the fill level of a medium (2) provided in a container (1) on the basis of the radar principle, wherein a measuring signal is generated and emitted in the direction of the medium (2) by means of a transmitting antenna (6), a reflected portion of the measuring signal is detected by means of a receiving antenna (7) and a fill level is determined by means of the transit time of the measuring signal, wherein the measuring signal is emitted into a plurality of regions different from one another,
**characterized in**
**that** the reflected portions of the measuring signal are each received at a plurality of receiving stations that are different from one another, that a plurality of permanently installed transmitting antennas (6) and a plurality of permanently installed receiving antennas (7) are provided, wherein the transmitting antennas (6) and the receiving antennas (7) do not act as transmitting and receiving antennas, wherein one receiving antenna is arranged at each receiving station,
wherein one transmitting antenna (6) and one receiving antenna (7) are successively activated simultaneously, so that several, preferably all combinations of a transmitting antenna (6) with a receiving antenna (7) are used, and that the respective amplitude and phase of the reflected portion of the measured signal are determined for at least two receiving points and the surface structure of the medium (2) is determined approximately on the basis of a geometric model for the surface shape of the medium (2) provided in the container (1) using this amplitude and phase information.

2. Method according to claim 1, **characterized in that** an FMCW signal is used as the measuring signal.

## Revendications

1. Procédé de mesure du niveau de remplissage d'un milieu (2) se trouvant dans un récipient (1) sur la base du principe du radar, un signal de mesure étant généré et étant envoyé au moyen d'une antenne émettrice (6) dans la direction du milieu (2), une partie du signal de mesure réfléchie en retour étant détectée au moyen d'une antenne réceptrice (7) et un niveau de remplissage étant déterminé au moyen du temps de parcours du signal de mesure, le signal de mesure étant envoyé dans une pluralité de régions différentes les unes des autres,
**caractérisé en ce que**
les parties du signal de mesure réfléchies en retour étant à chaque fois reçues au niveau d'une pluralité de zones de réception différentes les unes des autres, **en ce qu'**une pluralité d'antennes émettrices installées fixement (6) et une pluralité d'antennes réceptrices installées fixement (7) sont prévues, les antennes émettrices (6) et les antennes réceptrices (7) ne fonctionnant pas en tant qu'antennes émettrices et réceptrices, une antenne réceptrice étant disposée au niveau de chaque zone de réception,
à chaque fois les unes après les autres, une antenne émettrice (6) et une antenne réceptrice (7) étant activées simultanément de telle sorte que plusieurs, de préférence la totalité, des combinaisons d'une antenne émettrice (6) avec une antenne réceptrice (7) soient utilisées, et que pour au moins deux zones de réception, l'amplitude et la phase respectives de la partie du signal de mesure réfléchie en retour étant déterminées et avec ces informations d'amplitude et de phase, sur la base d'un modèle géométrique pour la forme de la surface du milieu (2) se trouvant dans le récipient (1), la structure de surface du milieu (2) étant déterminée de manière approximative.

2. Procédé selon la revendication 1, **caractérisé en ce que** l'on utilise en tant que signal de mesure un signal FMCW.
